# EUROPÄISCHE PATENTSCHRIFT

(11) **EP 0 365 019 B1**
(45) Veröffentlichungstag und Bekanntmachung des Hinweises auf die Patenterteilung: **24.03.1993**
(21) Anmeldenummer: 89119444.1
(22) Anmeldetag: 19.10.1989
(51) Int. Cl.: A01D 45/02

(54) **Pflückvorrichtung zum Ernten von Halmfrüchten, insbesondere Mais**
Picking device for harvesting cereals, especially maize
Dispositif à cueillir pour récolter des céréales, en particulier du mais

(30) Priorität: 19.10.1988 DE 8813151 U; 18.11.1988 DE 8814440 U
(43) Veröffentlichungstag der Anmeldung: 25.04.1990
(73) Patentinhaber: BISO GmbH Maschinenfabrik, D-32289 Rödinghausen (DE)
(72) Erfinder: Scharf, Alois, D-4520 Melle 8 - St. Annen (DE)
(74) Vertreter: Zinnecker, Armin, Dipl.-Ing.

(56) Entgegenhaltungen:
- AT-B- 301 234
- AT-B- 307 784
- DE-A- 2 011 976
- DE-A- 3 727 535

## Beschreibung

Die Erfindung betrifft eine Pflückvorrichtung zum Ernten von Halmfrüchten, insbesondere Mais oder Sonnenblumen, nach dem Oberbegriff des Anspruchs 1.

Eine derartige Pflückvorrichtung ist aus der DE-OS 37 27 535 bekannt. Die Pflückvorrichtung kann an der Vorderseite eines Mähdreschers angebracht sein. Die Rotationsachse der Messer der Pflückvorrichtung kann geneigt sein, und zwar vorzugsweise in Fahrtrichtung des Mähdreschers. Bei der vorbekannten Pflückvorrichtung wird durch die in dem Leitblech angeordneten Rückhaltebleche oder Rückhalteleisten ein kürzeres Schneiden der Stengel, insbesondere der Maisstengel bzw. Sonnenblumenstengel, bewirkt. Verschiedene Ausgestaltungen und vorteilhafte Weiterbildungen der Leitbleche und der Rückhaltebleche sowie Rückhalteleisten sind in der genannten Vorveröffentlichung ausführlich beschrieben worden.

Beim praktischen Betrieb hat es sich gezeigt, daß in gewissen Anwendungsfällen die Häckselwirkung der vorbekannten Pflückvorrichtung verbesserungsbedürftig sein kann.

Aufgabe der Erfindung ist es daher, bei einer Pflückvorrichtung der eingangs angegebenen Art die Häckselwirkung zu verbessern.

Die Erfindung löst diese Aufgabe durch die im kennzeichnenden Teil des Anspruchs 1 angegebenen Merkmale. Quer zur Fahrtrichtung sind mehrere Stengelhäcksler vorgesehen. Auf der den Rückhalteblechen oder -Leisten gegenüberliegenden Seite des Leitblechs ist ein Zuleitblech angeordnet, dessen Abstand von der zugehörigen Messer-Drehachse nur geringfügig größer ist als der Umlaufkreis der Messer und das den freien Raum zwischen der Rückseite des Leitblechs und den rotierenden Messerspitzen des angrenzenden Stengelhäckslers abdeckt. Die Anzahl der Stengelhäcksler entspricht dabei der Anzahl der Reihen von Halmfrüchten. Es ist möglich, bis zu acht oder auch noch mehr Stengelhäcksler vorzusehen. Es ist auch möglich, mehr als eine Pflückvorrichtung anzuordnen, was insbesondere in einem unebenen oder hügeligen Gelände von Vorteil ist.

Durch das Zuleitblech werden die Stengel den rotierenden Messern zugeführt, so daß diese den Stengel erfassen und wirkungsvoll zerkleinern können. Da der Abstand des Zuleitblechs von der zugehörigen Messer-Drehachse nur geringfügig größer ist als der Umlaufkreis der Messer, werden die Stengel von den Messern erfaßt und wirkungsvoll zerkleinert. Das Zuleitblech deckt den freien Raum zwischen der Rückseite des Leitblechs und den rotierenden Messerspitzen des angrenzenden Stengelhäckslers ab, so daß die in diesem Bereich ankommenden Stengel den Messern zugeleitet werden.

Vorteilhafte Weiterbildungen sind in den Unteransprüchen beschrieben.

Das Zuleitblech kann schräg auf die rotierenden Messer zu verlaufen.

Vorzugsweise endet das Zuleitblech im Bereich der Verbindungslinie der Messer-Drehachsen.

Das Zuleitblech kann als Leitkeil ausgebildet sein. Wenn das jeweilige Zuleitblech an der jeweiligen Rückseite des benachbarten Leitblechs angeordnet ist, wird der gesamte Aufbau vereinfacht und damit die Herstellung verbilligt.

Vorzugsweise sind die Stengelhäcksler durch eine oder mehrere Kufen auf dem Boden abgestützt, wodurch eine optimale Anpassung an verschiedene Bodenverhältnisse gewährleistet ist. Die Stengelhäcksler können im Bereich ihres hinteren Endes elastisch aufgehängt sein, um die Bodenführung zu verbessern.

Vorzugsweise sind die Stengelhäcksler im Bereich ihres hinteren Endes durch eine Kette mit einem Anhängepunkt verbunden, wobei die Länge der Kette die Bewegung der Stengelhäcksler nach unten begrenzt. Die Kette sorgt also für eine Endbegrenzung derjenigen Bewegung der Stengelhäcksler, die eine optimale Anpassung an verschiedene Bodenverhältnisse gewährleistet.

Die Häckselwirkung wird wesentlich verbessert, wenn die Messer an ihrer Stirnseite geschliffen und/oder gezahnt sind. Die Messer können dabei an der Stirnseite gerade geschliffen sein. Es ist aber auch möglich, die Messer an der Stirnseite rund zu schleifen, wobei der Messerradius dann vorzugsweise gleich dem Trommel-Radius ist. Eine weitere Steigerung der Häckselwirkung läßt sich dadurch erreichen, daß die Messer an der Stirnseite nicht nur geschliffen, sondern auch noch gezahnt sind.

Vorzugsweise sind die Messer an ihren Längsseiten gezahnt. Auch hierdurch wird die Häckselwirkung verbessert. Vorzugsweise ist der Anschliff der Messer an ihren Längsseiten um 180° gedreht.

Wenn eine Längsseite abgeschliffen ist, kann dann das Messer einfach um 180° gedreht werden. Hierdurch reduzieren sich die Schleifintervalle.

Der stirnseitige Anschliff ist vorzugsweise symmetrisch. In diesem Fall kann das Messer um 180° gedreht werden, ohne daß die Wirkung des stirnseitigen Anschliffs nachläßt.

Ein Ausführungsbeispiel der Erfindung wird nachstehend anhand der beigefügten Zeichnungen im einzelnen erläutert. In den Zeichnungen zeigt
- Fig. 1: eine Pflückvorrichtung in einer Seitenansicht,
- Fig. 2: eine Darstellung der Stengelhäcksler von unten,
- Fig. 3: einen vergrößerten Ausschnitt aus der Fig. 2,
- Fig. 4: einen vergrößerten Ausschnitt aus der Fig. 1,
- Fig. 5: eine Teilansicht der Vorrichtung von oben,
- Fig. 6: ein stirnseitig angeschliffenes und gezahntes Messer in einer Ansicht von oben,
- Fig. 7: das in Fig. 6 dargestellte Messer in einem Querschnitt,
- Fig. 8: das in Fig. 6 gezeigte Messer in einem Längsschnitt,
- Fig. 9: ein weiteres stirnseitig angeschliffenes und gezahntes Messer, bei dem der stirnseitige Anschliff symmetrisch ist,
- Fig. 10: einen Querschnitt durch das in Fig. 9 gezeigte Messer,
- Fig. 11: einen Längsschnitt durch das in Fig. 9 dargestellte Messer,
- Fig. 12: ein weiteres Messer, das an der Stirnseite gerade geschliffen und gezahnt ist, in einer Ansicht von oben, in einem Querschnitt und in einem Längsschnitt,
- Fig. 13: ein weiteres Messer, das an der Stirnseite gerade geschliffen und gezahnt ist und bei dem der Anschliff an den Längsseiten um 180° gedreht ist, in einer Ansicht von oben, in einem Längsschnitt und in einem Querschnitt, und
- Fig. 14: ein weiteres Messer, das an der Stirnseite rund geschliffen und gezahnt ist und bei dem der Anschliff an den Längsseiten um 180° gedreht ist, in einer Ansicht von oben, in einem Querschnitt und in einem Längsschnitt.

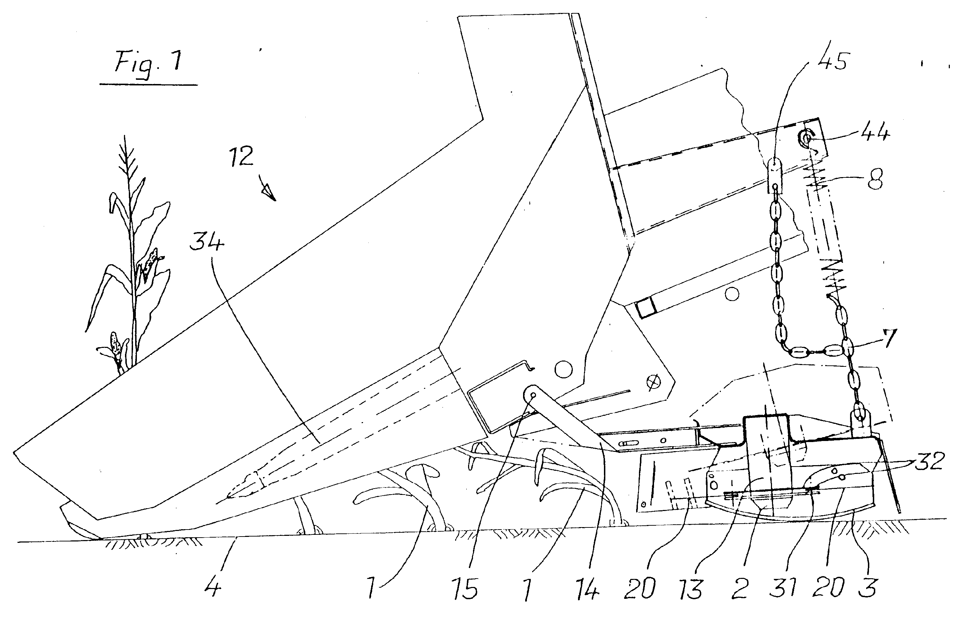

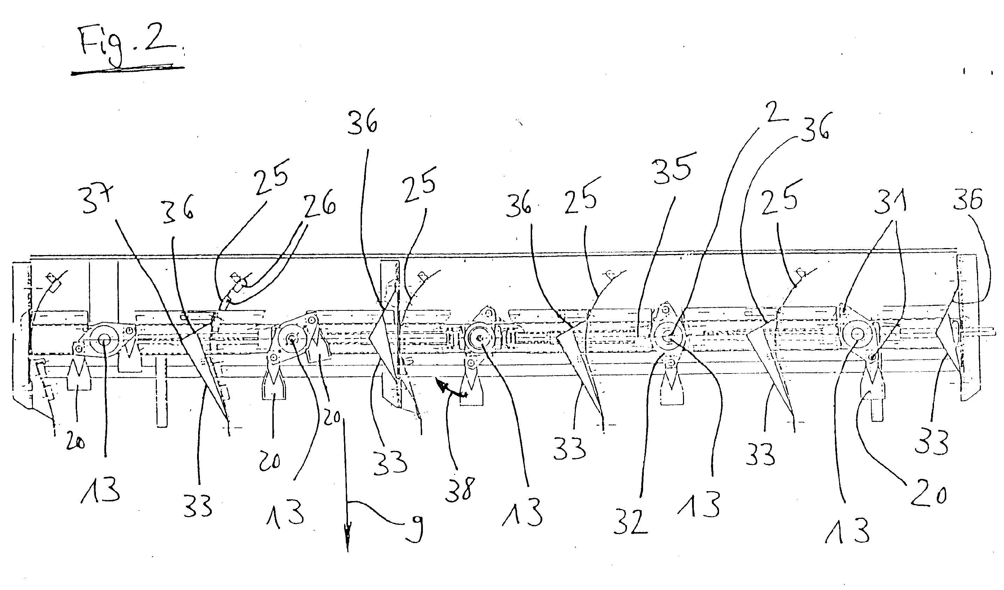

Die Fig. 1 zeigt die Pflückvorrichtung 12 zum Ernten von Halmfrüchten, insbesondere Mais, die an einem in der Fig. 1 nicht gezeigten Mähdrescher gelagert sein kann. Der Stengelhäcksler 13 ist mit dem Schwenkarm 14 auf dem Lagerbolzen 15 an der Pflückvorrichtung 12 gelagert. Der Häcksler 13 dient zum Zerkleinern und Breitstreuen der Stengel 1. Er besitzt um eine vertikale Achse 2 rotierende Messer 20. Der Stengelhäcksler 13 ist durch mehrere Kufen 3 auf dem Boden 4 abgestützt. Weiterhin ist er im Bereich seines hinteren Endes elastisch aufgehängt, und zwar durch eine Kette 7 und eine Zugfeder 8.

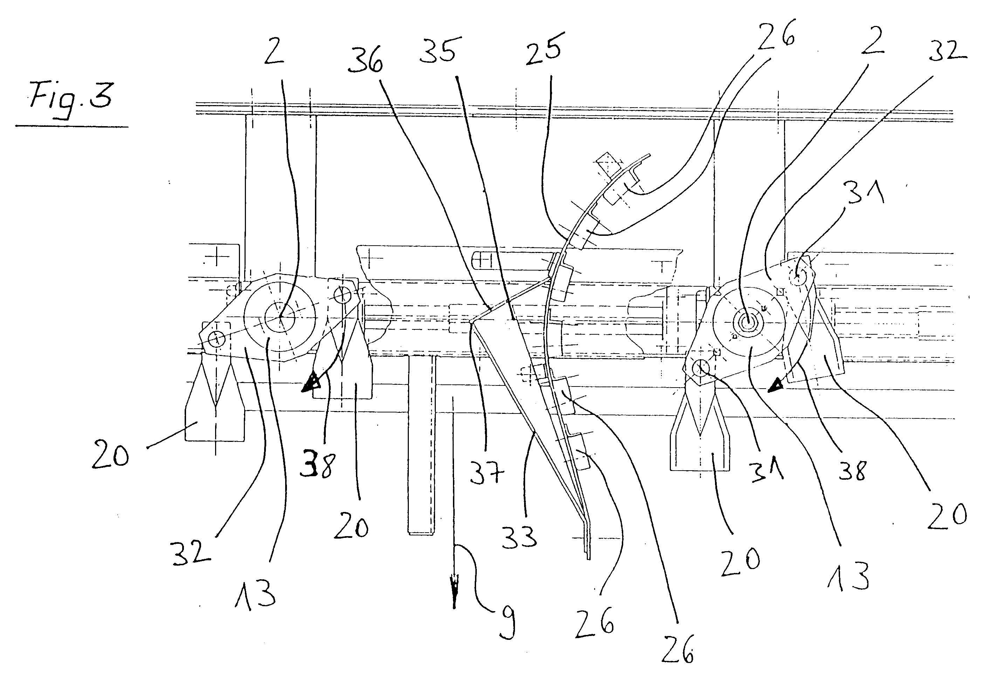

Die Fig. 2 zeigt eine Draufsicht von unten auf die quer zur Mähdrescher-Fahrtrichtung 9 nebeneinander im Abstand voneinander angeordneten Stengelhäcksler 13. In der Fig. 3 ist ein vergrößerter Ausschnitt aus der Fig. 2 dargestellt, in dem zwei nebeneinander quer zur Mähdrescher-Fahrtrichtung 9 im Abstand voneinander angeordnete Stengelhäcksler 13 zu sehen sind. Zu jedem Stengelhäcksler 13 gehört ein diesen teilweise umgebendes Leitblech 25, in dem Rückhaltebleche 26 angeordnet sind. Die Rückhaltebleche 26 dienen dazu, ein kürzeres Schneiden der Stengel zu bewirken, wie in der DE-OS 37 27 535 ausführlich erläutert.

Jeder Stengelhäcksler 13 besitzt zwei um 180° versetzte Messer 20, die in der Fig. 3 im Stillstand gezeigt sind. Wenn die Messer um die Stengelhäcksler-Drehachse 2 rotieren, weisen sie durch die Zentrifugalkraft jeweils nach außen. Jedes Messer 20 ist zu diesem Zweck um einen Bolzen 31 drehbar gelagert, der in zwei prallelen Befestigungsblechen 32 angeordnet ist.

Auf der dem jeweiligen Leitblech 25 gegenüberliegenden Seite der rotierenden Messer 20 ist jeweils ein Zuleitblech 33 angeordnet. Dieses Zuleitblech 33 wirkt als Leitkeil. Es deckt den freien Raum zwischen der Rückseite des Zuleitblechs 25 und den rotierenden Messerspitzen des angrenzenden Stengelhäckslers 13 ab, so daß die in diesem Bereich ankommenden Stengel den Messern 20 zugeleitet werden. Die Maisreihen haben einen Abstand von 700 bis 800 mm. In diesem Abstand sind auch die horizontal rotierenden Messer 20 bzw. die Messerdrehachsen 2 angeordnet. Der Außendurchmesser der rotierenden Messer 20 beträgt demgegenüber maximal 580 mm. Es entsteht daher möglicherweise die Schwierigkeit, daß ein Streifen Maisstengel und -blätter, die durch die Pflückerwalzen 34 (Fig. 1) nach unten gedrückt waren, in voller Länge bis auf den Boden 4 heruntergedrückt werden. Der durch das Zuleitblech 33 gebildete Leitkeil führt in dieser Lücke von etwa 150 bis 200 mm die Maisstengel den rotierenden Messern 20 zu, so daß diese Messer 20 die Maisstengel mit herumnehmen können und sie anschließend im Zusammenwirken mit den Rückhalteblechen 26 zerkleinern. Um die Lücke, die durch das Zuleitblech 33 geschlossen wird, anderweitig zu schließen, wäre es an sich denkbar, die Länge der Messer 20 zu vergrößern. Dies würde jedoch die gesamte Vorrichtung wesentlich verteuern, da längere Messer teurer sind. Auch der Wartungsaufwand, der im wesentlichen durch das Erfordernis bestimmt wird, die Messer zu schleifen, würde wesentlich vergrößert. Schließlich müßten beim Anlaufen wesentlich größere Massenträgheitsmomente überwunden werden. Durch die Neuerung wird es ermöglicht, eine große Arbeitsbreite bei relativ kurzen Messern 20 zu erreichen und gleichzeitig eine sehr gute Häckselwirkung zu gewährleisten.

Das Zuleitblech 33 verläuft schräg auf die rotierenden Messer 20 zu; es endet im Bereich der Verbindungslinie 35 der Messer-Drehachsen 2. An das Zuleitblech 33 schließt sich die Rückseite 36 an, die mit dem Zuleitblech 33 einen Winkel von etwa 90° bildet. Die Ecke 37 zwischen dem Zuleitblech 33 und der Rückseite 36 liegt in etwa auf der Verbindungslinie 35 der Messer-Drehachsen 2. Der Abstand des Zuleitblechs 33 von der zugehörigen Messer-Drehachse 2 (in Fig. 3 links von dem Zuleitblech 33) ist nur geringfügig größer als der Umlaufkreis der Messer 20. Mit anderen Worten: Die Messer 20 gelangen bei ihrer Rotation relativ nahe bzw. möglichst nahe an die Ecke 37, ohne diese jedoch zu berühren, so daß das Zuleitblech 33 den Spalt zwischen dem äußeren Umlaufkreis der Messer und der Rückseite des Leitblechs 25 möglichst vollständig abdeckt. Die Messer 20 rotieren dabei in Richtung der Pfeile 38.

Das jeweilige Zuleitblech 33 ist auf der Rückseite des benachbarten Leitblechs 25 angeordnet. Die Verbindung kann auf bekannte Art und Weise erfolgen, beispeilsweise durch Verschraubung oder Verschweißung oder ähnliches.

Die in Fig. 1 gezeigte Aufhängung durch Federn 8 soll den Stengelhäcksler 13 entlasten, damit er nicht mit vollem Gewicht mit den Kufen 3 über den Boden 4 schleift. Weiterhin wirken die Federn 8 bei Bodenunebenheiten entlastend.

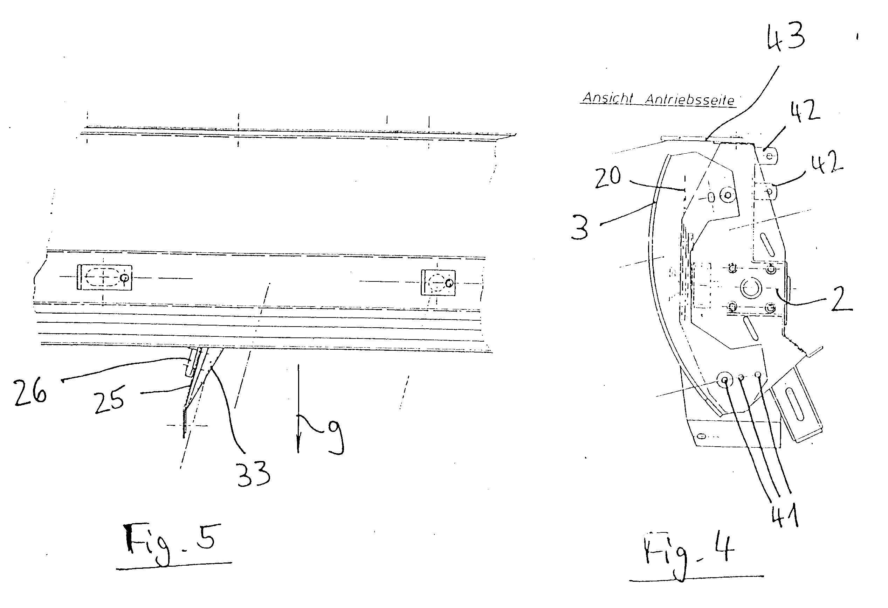

Die Fig. 4 zeigt den in Fig. 1 dargestellten Stengelhäcksler in einer vergrößerten Darstellung. Die Kufe 3 kann mittels der Lochreihe 41 verstellt werden. Der Stengelhäcksler wird durch die mit Löchern versehenen Laschen 42 am Pflücker angehängt. Der Gummischutz 43 deckt die Spitzen der Messer 20 ab, um eine Verletzungsgefahr auszuschließen und fliegende Teile (Steine, Stengelknoten oder Stahlteile) abzufangen.

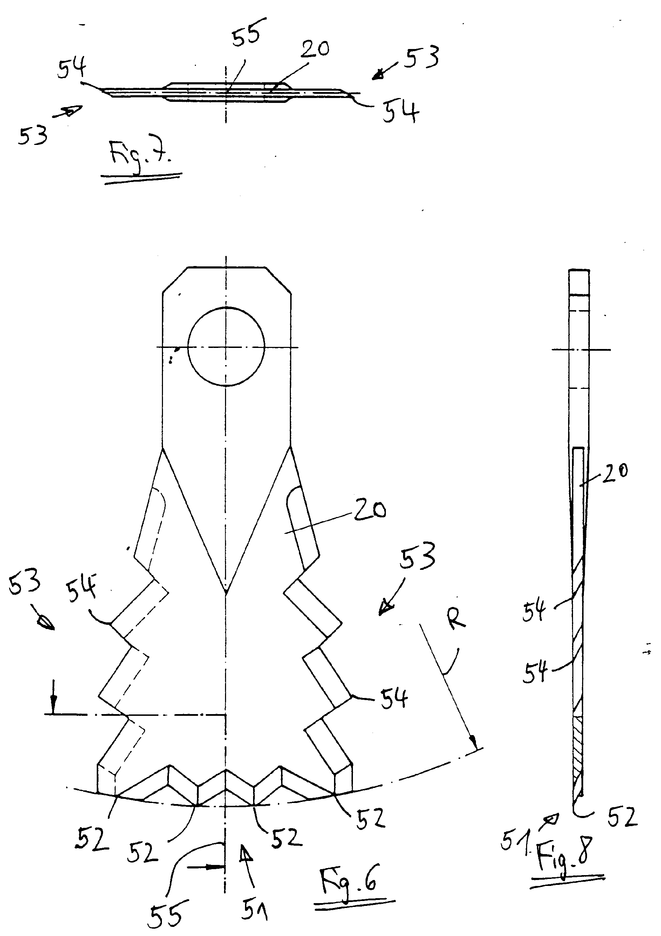

In der Fig. 5 werden das Leitblech 25 und das Zuleitblech 33 zum größten Teil von dem Gehäuse abgedeckt. Lediglich die in Fahrtrichtung 9 vorne liegenden Enden sind zu sehen.

Wie in Fig. 1 zu sehen, sind die Stengelhäcksler 13 im Bereich ihres hinteren Endes durch eine Kette 7 mit einem Anhängepunkt 45 verbunden, wobei die Länge der Kette 7 die Bewegung der Stengelhäcksler 13 nach unten begrenzt. Die Kette 7 ist einerseits mit der Feder 8 verbunden. Hierdurch kann das hintere Ende der Stengelhäcksler federnd nachgeben, wodurch eine Anpassung an verschiedene Bodenverhältnisse gewährleistet ist. An einem Glied der Kette 7 ist eine weitere Kette angebracht, die zum Anhängepunkt 45 führt. Diese zum Anhängepunkt 45 führende Kette hängt in der in Fig. 1 gezeigten Stellung durch. Ihre Länge begrenzt den Weg des hinteren Endes der Stengelhäcksler 13 nach unten. Die zum Anhängepunkt 45 geführte Kette 7 sorgt also für eine Endbegrenzung dieser Bewegung der Stengelhäcksler 13 zum Ausgleich der Bodenunebenheiten.

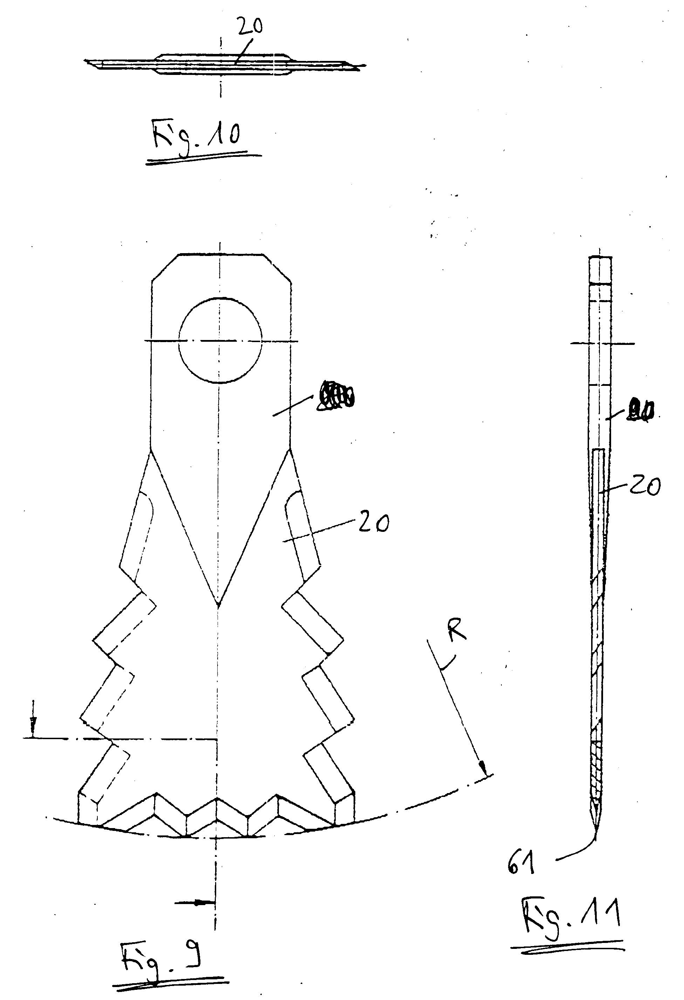

Die Fig. 6 zeigt ein Messer in einer Ansicht von oben, bei dem die Stirnseite 51 angeschliffen ist. Das in Fig. 6 gezeigte Messer 20 ist an der Stirnseite 51 rund geschliffen. Der Messerradius R ist gleich dem Trommel-Radius, also im Abstand der Stirnseite des Messers von der Rotationsachse 2. Das Messer gemäß Fig. 6 ist an der Stirnseite zusätzlich mit Zähnen 52 versehen, also gezahnt. Die Zähne 52 sind symmetrisch zur Längsmittellinie 55 angeordnet. Zusätzlich sind auch an den Längsseiten 53 des Messers 20 Zähne 54 vorhanden. Der Anschliff des Messers 20 an seinen Längsseiten 53 ist um 180° gedreht, wie aus der Fig. 7 ersichtlich. Bei einer Drehung des Messers 20 um 180° um seine Längsmittelachse 55 wird das Messer also in sich überführt.

Die Fig. 8 zeigt einen Längsschnitt durch das in Fig. 6 dargestellte Messer.

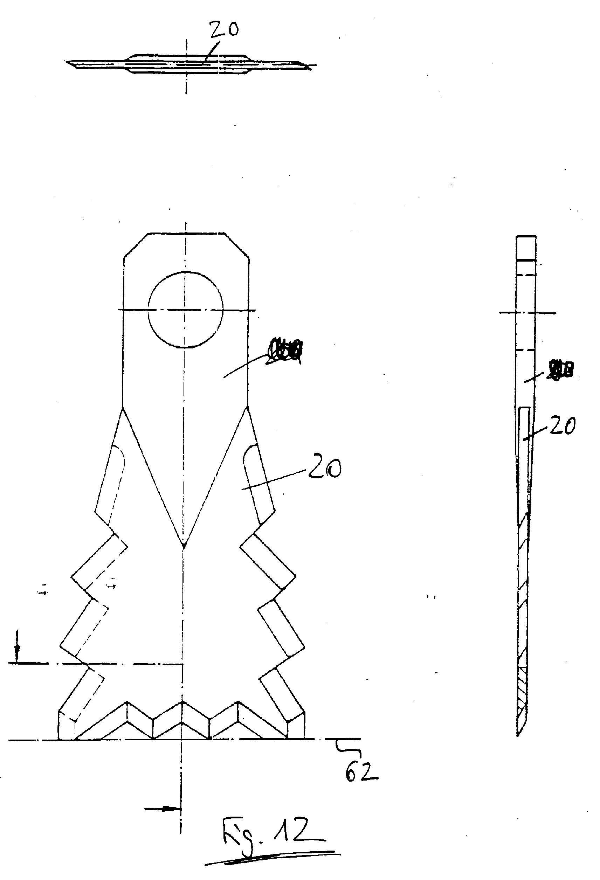

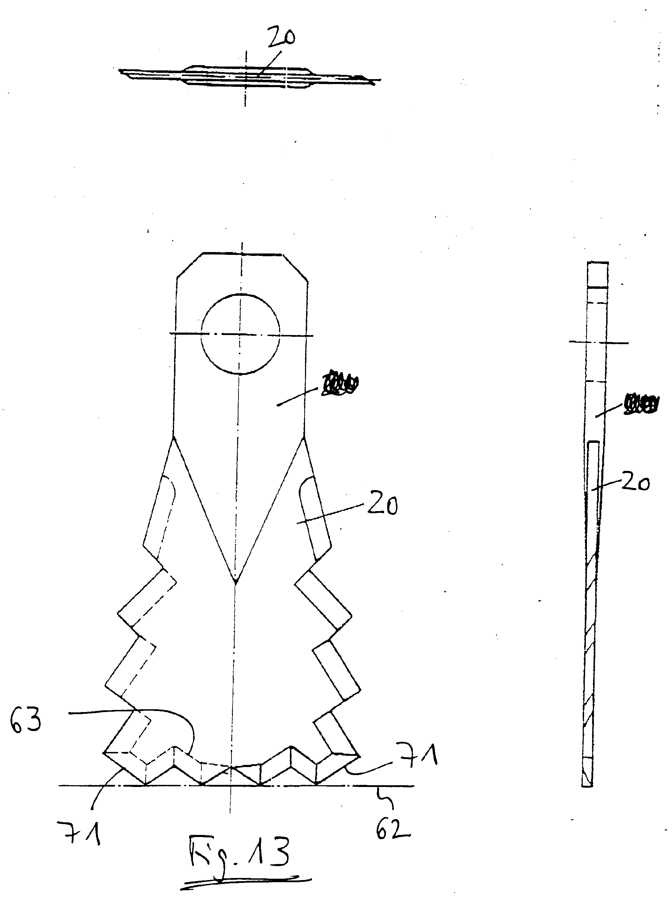

Die Fig. 9 zeigt in einer der Fig. 6 entsprechenden Darstellung ein weiteres Messer 20 in einer Ansicht von oben, bei dem der stirnseitige Anschliff symmetrisch ist, wie aus Fig. 11 ersichtlich. Der stirnseitige symmetrische Anschliff ist mit dem Bezugszeichen 61 versehen.

Die Fig. 12 zeigt ein Messer 20, bei dem die Stirnseite gerade geschliffen ist, wie anhand der strichpunktierten Linie 62 ersichtlich. Das Messer ist stirnseitig gezahnt. Auch an den Längsseiten sind Zähne vorhanden, deren Anschliff um 180° gedreht ist.

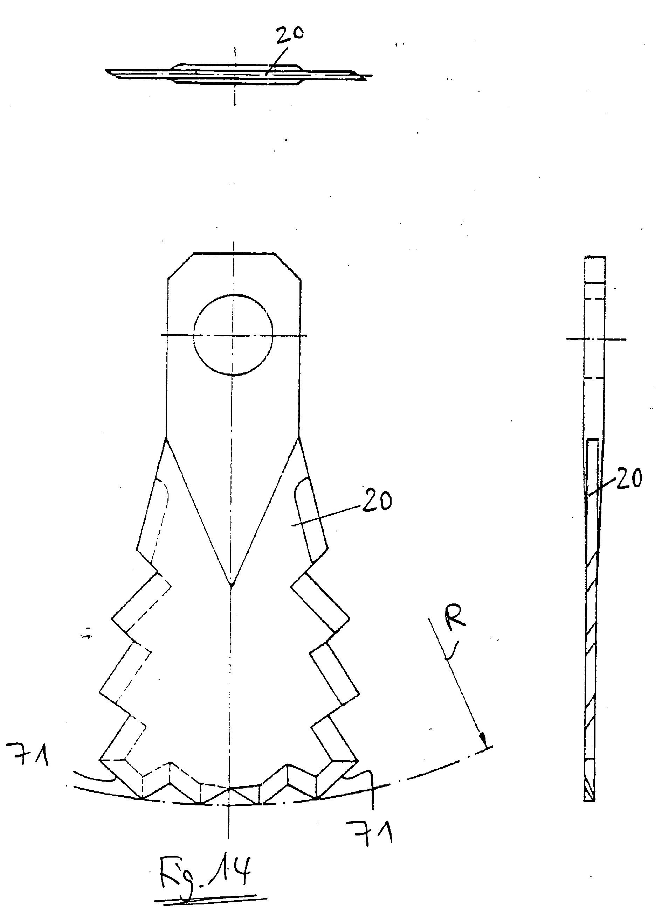

Die Fig. 13 zeigt ein Messer 20 mit geradem stirnseitigen Anschliff 62 sowie mit stirnseitigen Zähnen. Auch hier ist der Anschliff an den Längsseiten wieder um 180° gedreht. Diese Drehung um 180° setzt sich auch an der Stirnseite fort, was durch die gestrichelte Linie 63 verdeutlicht wird. Die äußeren Ecken des Messers 20 sind abgeschrägt, also mit Abschrägungen 71 versehen, die vorzugsweise 25 - 35 mm lang sind.

Die Fig. 14 zeigt das in Fig. 13 dargestellte Messer mit dem Unterschied, daß es in der Fig. 14 rund, also mit einem Radius R, geschliffen ist.

Bei sämtlichen Messern kann auch der Anschliff an den Längsseiten symmetrisch sein.

An der Stirnseite können die äußeren Ecken der Messer abgeschrägt und mit angeschliffenen Schneiden versehen sein. Die Maisstengel werden von den abgeschrägten Ecken zusätzlich den Rückhaltern zugeführt und gleichzeitig durch die angeschliffenen Schneiden zerkleinert. Die Schneiden werden um die Messerecken herumgezogen und verlängert; dadurch wird der Kraftaufwand für das Schneiden verringert. In einer nicht dargestellten Ausführungsform können die Messerecken auch abgerundet und mit angeschliffenen Schneiden ausgerüstet werden.

Es liegt im Rahmen der durch die Ansprüche definierten Erfindung, wenn die Zähne an den Stirnseiten der Messer keinen Anschliff erhalten.

## Patentansprüche

1. Pflückvorrichtung zum Ernten von Halmfrüchten, insbesondere Mais, mit einem unterhalb eines Pflückers angeordneten Stengelhäcksler (13) zum Zerkleinern und Breitstreuen der Stengel (1),
wobei der Stengelhäcksler (13) um einer vertikale Achse (2) rotierende Messer (20) und mindestens ein diese teilweise umgebendes Leitblech (25) aufweist, in dem Rückhaltebleche (26) oder -leisten angeordnet sind,
**dadurch gekennzeichnet,**
daß quer zur Fahrtrichtung (9) mehrere Stengelhäcksler (13) vorgesehen sind
und daß auf der den Rückhalteblechen (26) oder -Leisten gegenüberliegenden Seite des Leitblechs (25) ein Zuleitblech (33) angeordnet ist, dessen Abstand von der zugehörigen Messer-Drehachse (2) nur geringfügig größer ist als der Umlaufkreis der Messer und das den freien Raum zwischen der Rückseite des Leitblechs (25) und den rotierenden Messerspitzen des angrenzenden Stengelhäckslers (13) abdeckt.

2. Pflückvorrichtung nach Anspruch 1, dadurch gekennzeichnet, daß das Zuleitblech (33) schräg auf die rotierenden Messer (20) zu verläuft.

3. Pflückvorrichtung nach Anspruch 1 oder 2, dadurch gekennzeichnet, daß das Zuleitblech (33) im Bereich der Verbindungslinie (35) der Messer-Drehachsen (2) endet.

4. Pflückvorrichtung nach einem der vorhergehenden Ansprüche, dadurch gekennzeichnet, daß das Zuleitblech (33) als Leitkeil ausgebildet ist.

5. Pflückvorrichtung nach einem der vorhergehenden Ansprüche, dadurch gekennzeichnet, daß das jeweilige Zuleitblech (33) an der jeweiligen Rückseite des benachbarten Leitblechs (25) angeordnet ist.

6. Pflückvorrichtung nach einem der vorhergehenden Ansprüche dadurch gekennzeichnet, daß die Stengelhäcksler (13) durch einer oder mehrer Kufen (3) auf dem Boden (4) abgestützt sind.

7. Pflückvorrichtung nach einem der vorhergehenden Ansprüche, dadurch gekennzeichnet, daß die Stengelhäcksler (13) im Bereich ihres hinteren Endes elastisch (8) aufgehängt sind.

8. Pflückvorrichtung nach einem der vorhergehenden Ansprüche, dadurch gekennzeichnet, daß die Stengelhäcksler (13) im Bereich ihres hinteren Endes durch eine Kette (7) mit einem Anhängepunkt (45) verbunden sind, wobei die Länge der Kette (7) die Bewegung der Stengelhäcksler (13) nach unten begrenzt.

9. Pflückvorrichtung nach einem der vorhergehenden Ansprüche, dadurch gekennzeichnet, daß die Messer (20) an ihrer Stirnseite (51) geschliffen und/oder gezahnt sind.

10. Pflückvorrichtung nach Anspruch 9, dadurch gekennzeichnet, daß die Messer (20) an der Stirnseite gerade geschliffen sind.

11. Pflückvorrichtung nach Anspruch 9, dadurch gekennezeichnet, daß die Messer (20) an der Stirnseite rauh geschliffen sind.

12. Pflückvorrichtung nach Anspruch 11, dadurch gekennzeichnet, daß der Messerradius (R) gleich dem Trommel-Radius ist.

13. Pflückvorrichtung nach einem der Ansprüche 9 bis 12, dadurch gekennzeichnet, daß die Messer (20) an der Stirnseite gezahnt sind.

14. Pflückvorrichtung nach einem der vorhergehenden Ansprüche, dadurch gekennzeichnet, daß die Messer (20) an ihren Längsseiten (53) gezahnt (54) sind.

15. Pflückvorrichtung nach einem der vorhergehenden Ansprüche, dadurch gekennzeichnet, daß der Anschliff der Messer (20) an ihren Längsseiten (53) um 180° gedreht ist (Fig. 7).

16. Pflückvorrichtung nach einem der Ansprüche 9 bis 15, dadurch gekennzeichnet, daß der stirnseitige Anschliff symmetrisch ist (Fig. 11).

## Claims

1. A gathering device for the harvesting of cereal crops, more particularly corn, comprising a stalk chopper (13) arranged underneath a gatherer for comminuting and spreading out the stalks (1),
said stalk chopper (13) having knives (20) rotating about a vertical axis (2) and at least one sheet metal guide (25) partly encircling the knives, in which sheet metal retainers (26) or bar retainers are arranged,
**characterized in that**
a plurality of stalk choppers (13) are arranged transversely in relation to the direction (9) of travel
and in that on the side opposite to the sheet metal retainers (26) or bars, of the sheet metal guide (25) a sheet metal supply guide (33) is arranged, whose distance from the associated knife axis (2) of rotation is only slightly larger than the circle of revolution of the knives and covers over the free space between the rear side of the sheet metal guide (25) and the rotating knife tips of the adjacent stalk chopper (13).

2. The gathering device as claimed in claim 1, characterized in that the sheet metal supply guide (33) extends obliquely towards the rotating knives (20).

3. The gathering device as claimed in claim 1 or in claim 2, characterized in that the sheet metal supply guide (33) terminates adjacent to the line (35) connecting the axes of rotation (2) of the knives.

4. The gathering device as claimed in any one of the preceding claims, characterized in that the sheet metal supply guide (33) is designed in the form of a guiding wedge-like structure.

5. The gathering device as claimed in any one of the preceding claims, characterized in that the respective sheet metal supply guide (33) is arranged on the respective rear side of the adjacent sheet metal guide (25).

6. The gathering device as claimed in any one of the preceding claims, characterized in that the stalk choppers (13) are supported by one or more runners (3) on the ground (4).

7. The gathering device as claimed in any one of the preceding claims, characterized in that the stalk choppers (13) are carried elastically (8) adjacent to a rear end thereof.

8. The gathering device as claimed in any one of the preceding claims, characterized in that the stalk choppers (13) are connected adjacent to a rear end thereof by a chain (7) with an attachment point (45), the length of the chain (7) limiting the movement of the stalk choppers (13) downwards.

9. The gathering device as claimed in any one of the preceding claims, characterized in that the knives (20) are ground and/or toothed at their front end (51).

10. The gathering device as claimed in any one of the preceding claim, characterized in that the knives (20) are ground straight on their front side.

11. The gathering device as claimed in claim 9, characterized in that the knives (20) are ground rough on their end side.

12. The gathering device as claimed in claim 11, characterized in the radius (R) of the knives is equal to the radius of the drum.

13. The gathering device as claimed in any one of the claims 9 through 12, characterized in that the knives (20) are toothed on the front side thereof.

14. The gathering device as claimed in any one of the preceding claims, characterized in that the knives (20) are toothed (54) on longitudinal sides (53) thereof.

15. The gathering device as claimed in any one of the preceding claim, characterized in that the ground surface of the knives (20) on their longitudinal sides (53) is turned through 180° (figure 7).

16. The gathering device as claimed in any one of the preceding claims, characterized in that the front side ground surface is symmetrical (figure 11).

## Revendications

1. Dispositif à cueillir pour récolter des céréales, en particulier du maïs, avec une hacheuse de tiges (13) disposée en dessous d'un dispositif à cueillir pour fractionner et disperser en largeur les tiges (1), la hacheuse de tiges (13) présentant des couteaux (20) tournants autour d'un axe vertical (2) et au moins une tôle de guidage entourant partiellement ceux-ci et dans lequel sont disposées des tôles ou barres de retenue (26),
caractérisé en ce que plusieurs hacheuses de tiges (13) sont prévues transversalement à la direction d'avance (9), et en ce que sur le côté de la tôle de guidage (25) opposé aux tôles ou barres de retenue (26) est disposée une tôle d'amenée (33) dont l'écart par rapport à l'axe de rotation de couteaux associé (2) n'est que légèrement plus grand que le cercle décrit par les couteaux et qui recouvre l'espace libre entre le côté arrière de la tôle de guidage (25) et les pointes de couteaux en rotation de la hacheuse de tiges avoisinante (13).

2. Dispositif à cueillir selon la revendication 1, caractérisé en ce que la tôle d'amenée (33) s'étend de façon oblique vers les couteaux tournants (20).

3. Dispositif à cueillir selon la revendication 1 ou 2, caractérisé en ce que la tôle d'amenée (33) se termine au voisinage de la ligne de liaison (35) des axes de rotation de couteaux (2).

4. Dispositif à cueillir selon l'une des revendications précédentes, caractérisé en ce que la tôle d'amenée (33) est réalisée sous forme de coin de guidage.

5. Dispositif à cueillir selon l'une des revendications précédentes, caractérisé en ce que la tôle d'amenée respective (33) est disposée sur le côté arrière respectif de la tôle de guidage (25) avoisinante.

6. Dispositif à cueillir selon l'une des revendications précédentes, caractérisé en ce que les hacheuses de tiges (13) prennent appui par un ou plusieurs patins (3) sur le sol (4).

7. Dispositif à cueillir selon l'une des revendications précédentes, caractérisé en ce que les hacheuses de tiges (13) sont suspendues de manière élastique (8) au voisinage de leur extrémité arrière.

8. Dispositif à cueillir selon l'une des revendications précédentes, caractérisé en ce que les hacheuses de tiges (13) sont reliées au voisinage de leur extrémité arrière par une chaîne (7) par un point d'attelage ou d'accrochage (45), la longueur de la chaîne (7) délimitant le déplacement des hacheuses de tiges (13) vers le bas.

9. Dispositif à cueillir selon l'une des revendications précédentes, caractérisé en ce que les couteaux (20) sont affûtés et/ou dentés sur leurs côtés devant (51).

10. Dispositif à cueillir selon la revendication 9, caractérisé en ce que les couteaux (20) présentent un affûtage rectiligne sur le côté devant.

11. Dispositif à cueillir selon la revendication 9, caractérisé en ce que les couteaux (20) présentent un affûtage grossier sur le côté devant.

12. Dispositif à cueillir selon la revendication 11, caractérisé en ce que le rayon de couteau R est égal au rayon de tambour.

13. Dispositif à cueillir selon l'une des revendications 9 à 12, caractérisé en ce que les couteaux (20) sont dentés sur le côté devant.

14. Dispositif à cueillir selon l'une des revendications précédents, caractérisé en ce que les couteaux (20) sont dentés (54) sur leurs côtés longitudinaux (53).

15. Dispositif à cueillir selon l'une des revendications précédentes, caractérisé en ce que le tranchant des couteaux (20) est tourné de 180° sur leurs côtés longitudinaux (53) (figure 7).

16. Dispositif à cueillir selon l'une des revendications 9 à 15, caractérisé en ce que l'affûtage sur le côté devant est symétrique (figure 11).
